(19) Europäisches Patentamt
European Patent Office
Office européen des brevets

(11) **EP 3 716 619 A1**

(12) **EUROPEAN PATENT APPLICATION**

(43) Date of publication:
**30.09.2020 Bulletin 2020/40**

(51) Int Cl.:
**H04N 9/64** (2006.01) **H04N 1/64** (2006.01)
**H04N 1/56** (2006.01) **H04N 19/00** (2014.01)

(21) Application number: **19305399.8**

(22) Date of filing: **28.03.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital CE Patent Holdings
75017 Paris (FR)**

(72) Inventors:
• **POULI, Tania**
**35576 Cesson-Sévigné (FR)**
• **KERVEC, Jonathan**
**35576 Cesson-Sévigné (FR)**
• **STAUDER, Jürgen**
**35576 Cesson-Sévigné (FR)**

(74) Representative: **Huchet, Anne
InterDigital CE Patent Holdings
20, rue Rouget de Lisle
92130 Issy-les-Moulineaux (FR)**

(54) **GAMUT ESTIMATION**

(57) A method and apparatus are provided for providing a color gamut for source content. In on embodiment, the method includes comparing colors of the source content with a set of color gamuts, each color gamut of the set containing a plurality of colors; and selecting from the set of color gamuts, based on the comparison, a subset of color gamuts containing one or more color gamuts, each containing all the colors of the source content.

Fig. 1

## Description

### TECHNICAL FIELD

The present disclosure relates generally to picture and video presentation and more particularly to color gamut estimation applications as relating to picture and video presentations.

### BACKGROUND

This section is intended to introduce the reader to various aspects of art, which may be related to various aspects of the present disclosure that are described and/or claimed below. This discussion is believed to be helpful in providing the reader with background information to facilitate a better understanding. Accordingly, it should be understood that these statements are to be read in this light, and not as admissions of prior art.

The science of color is often referred to as called chromatics. This science is closely related to the understanding of perception of color by the human eye. The perception is linked to the stimulation of cells in the eye by the electromagnetic radiation in the visible spectrum. Color can therefore be defined by the subjective perception of a human observer in terms of, for example, hue, saturation and intensity. Color also has strong relationship with physical properties. Color categories are standardized globally and are associated with objects through the wavelength of the light. In this way, colors are characterized by the wavelength, frequency and intensity of light as defined by each object's physical properties (i.e. light absorption and emission).

Most light sources emit light at many different wavelengths and objects can be said to have the color of the light leaving their surfaces, which also takes into effect the incident illumination and the reflectance properties of the surface and the angles of illumination and viewing. Some objects emit, reflect and transmit light which also contributes to the color. A viewer's perception, therefore, depends on the spectrum of the light leaving its surface as well as a host of contextual cues. This complexity of factors in perceiving color, provides special challenges in color reproduction, especially in photography and digital content production as with regards to providing color constancy.

A color space, notably an output-referred color space, is a specific organization of colors that allows for reproducible representations of color, in both analog and digital representations. A color can be represented in a color space using color coordinates, for example a tuple of numbers. A gamut can be defined as a complete subset of colors in a color space. Detecting, recognizing and estimating the color gamut accurately, however, provides challenges. This is especially problematic in sequential images within a content. Pictorial content can be a video, a single image, several images or any other pictorial content which for simplicity is referenced as a source content. The colors of a source content are usually encoded in a so-called source encoding color space using color coordinates of this color space. The source encoding color space is also called source color container. This color space has a color gamut called source encoding color gamut or source container color gamut. The color gamut of a source encoding color space is usually defined as all colors having color coordinates within a specific range, for example [0,1] or [0,255]. All colors of the source content are within the color gamut of the source encoding color space. However, the source content may not use the full source encoding color gamut.

In a large number of cases, the source color gamut is not known. The source "color gamut is the color gamut that is actually populated by the source colors. For example, in video distribution via internet or dedicated broadcast channels to user devices, video is usually provided with reliable information about the source container that is used to encode the colors of the video, but information about the source color gamut used in production. Consequently, techniques are desirous that can output to a given medium using a certain output device content that provides the same sense of colors in the original even when particular gamut is lost in the process.

### Summary

A method and apparatus are provided for providing a color gamut for source content. In at least one embodiment, the method comprises comparing colors of the source content with a set of color gamuts, each color gamut of the set containing a set of colors; and selecting from the set of color gamuts, based on the comparison, a subset of color gamuts, each color gamut of the subset containing all the colors of the source content. In at least one embodiment an apparatus comprises at least one processor configured for comparing colors of the source content with a plurality of color gamuts, each color gamut of the set containing a plurality of colors; and selecting from the set of color gamuts, based on the comparison, a subset of one or more color gamuts, each containing all the colors of the source content

### BRIEF DESCRIPTION OF THE DRAWINGS

The present disclosure will be better understood and illustrated by means of the following embodiment and execution examples, in no way limitative, with reference to the appended figures on which:

Figure 1 is a graphical illustration of a trichoromatic diagram as per one example;

Figure 2 is a schematic diagram in accordance with an embodiment;

Figure 3 is an alternate embodiment in accordance with an embodiment using color re-encoding;

Figure 4 is an illustration of a predefined color set;

Figure 5 is an illustration of Figure 4 represented as a graph;

Figure 6 is an example illustrating a source gamut of a source video;

Figure 7 is a flow chart illustration in accordance to one embodiment;

Figure 8 is an input encoding color space picture;

Figure 9 is an out of range transformation illustration of Figure 8;

Figure 10 is another example of an out of range transformation illustration of Figure 8; and

Figure 11 is a graphical illustration of f(x) as a function example.

Wherever possible, the same reference numerals will be used throughout the figures to refer to the same or like parts.

## DESCRIPTION

It is to be understood that the figures and descriptions of the present disclosure have been simplified to illustrate elements that are relevant for a clear understanding of the present embodiments, while eliminating, for purposes of clarity, many other elements found in typical digital multimedia content delivery methods and systems. However, because such elements are well known in the art, a detailed discussion of such elements is not provided herein. The disclosure herein is directed to all such variations and modification. In addition, various inventive features are described below that can each be used independently of one another or in combination with other features. Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

In general, chromaticity is an objective specification of the quality of a color regardless of its luminance and is often represented by two independent parameters, namely hue (h) and colorfulness. The white point of an illuminant or of a display is a neutral reference characterized by a chromaticity and all other chromaticities may be defined in relation to this reference using polar coordinates. The hue is the angular component, and the purity is the radial component, normalized by the maximum radius for that hue.

A color picture also contains several arrays of samples (pixel values) in a specific picture/video format which specifies all information relative to the pixel values of a picture (or a video) and all information which may be used by a display and/or any other device to visualize and/or decode a picture (or video) for example. A color picture comprises at least one component, in the shape of a first array of samples, usually a luma (or luminance) component, and at least one another component, in the shape of at least one other array of samples. Or, equivalently, the same information may also be represented by a set of arrays of color samples (color components, color coordinates), such as the traditional tri-chromatic RGB color coordinates. A pixel value is represented by a vector of c values, where c is the number of components. Each value of a vector is represented with a number of bits which defines the precision of the pixel values.

It should be noted that the number of bits defines the precision, i.e. the number of possible steps. However, often, a higher number of bits is chosen if the dynamic range is higher, since in this case we need more precision.

A color gamut is a plurality of colors which can be represented within a color space. Color gamuts can be referred to as a certain complete subset of colors which can be represented within a color space. In one example, the signification of a color gamut is originated from the amount of colors a certain output device is able to reproduce. In another example, the signification of a color gamut is originated from the amount of colors present in a certain content such as an image or a video. Detecting and recognizing as well as estimating the color gamut of a content is a challenging issue. Content can include a single image, several images or recorded or live content and video. This content which will be hereinafter referenced as source content has colors that are usually encoded in a so-called source encoding color space using color coordinates of this color space. The source encoding color space is also called source color container. This color space has a color gamut called source encoding color gamut or source container color gamut. All colors of the source content are within the source encoding color space. However, the source content may not use the full source encoding color gamut, i.e. there are colors of the source encoding color space that are not used by the source content.

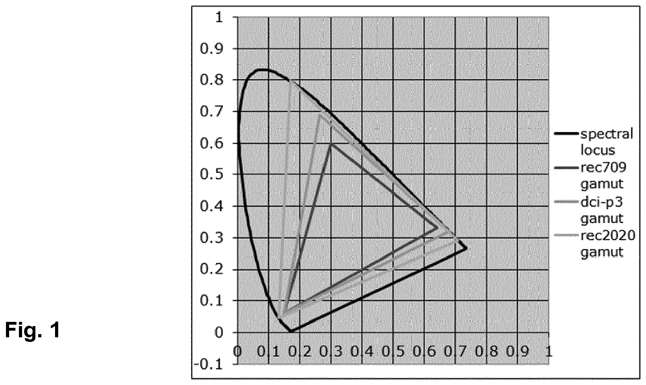

Figure 1 shows an example of a particular color gamut for ease of understanding. In Figure 1, a color gamut graphic illustration is shown that falls within BT.709 and BT.2020. In this example, a source content is produced and encoded in BT.709 which is the original source encoding color space , but later is re-encoded for distribution in the source encoding space BT.2020. All colors of this source content are within the BT.709 color gamut while the color gamut of the source encoding color space BT.2020 is larger than the BT.709 color gamut. As discussed, the color gamut containing all colors of a source content is called source content color gamut or shorter source gamut. In this typical use case, a reasonable choice for the source content color gamut would be the BT.709 color gamut. Since the content was produced within BT.709, all colors are within the BT.709 color gamut and the BT.709 color gamut will usually be well populated and covered by the content colors. However, also the BT.2020 color gamut is a valid choice for a source gamut since all content colors are within the BT.2020 color gamut.

In addition, Figure 1 is a diagram in CIE 1931 xy chromaticity coordinates that displays three different color gamuts that are commonly used for video content creation and distribution. Additionally, Figure 1 displays the spectral locus that contains all colors that are visible by an average human observer. It should be noted that the color gamut of the source container and the source gamut may be the same, but there are also cases, notably in transitionary periods between different standards, where a larger container is defined, but only a small part of the gamut of the container is used. The mentioned typical use case applies for example for wide color gamut TVs and the expected source container is BT.2020. However, no consumer displays can reproduce this large color gamut. In practice, the content will be produced within a DCI-P3 color gamut or a BT.709 color gamut, but is still be encoded in the source encoding color space which is the relatively large BT.2020 source container. This means that only a part of the colors of the BT.2020 color space will be actually used from the source container.

One challenging issue is that in a large number of cases the actual source color gamut that has been used in production is not known. For example, in video distribution via internet or dedicated broadcast channels to user devices, video is usually provided with reliable information about the source container that is used to encode the colors of the video, but information about the source color gamut used in production is often not available. It is for instance not known whether the video content encoded in a BT.2020 container covers the full BT.2020 color gamut, or only a smaller color gamut such as P3 or BT.709. It is often the case that from the source content itself, it is not known explicitly whether the content colors use the full BT.2020 color space or only a part of it.

When a broadcaster receives a video content from a video source and if both the container and the gamut of the video source are known, he could adapt the workflow and optimize the color processing and the end user color experience. When only the container is known, he will then consider that the source gamut is the same as the container. For example, for a BT.2020 container, a BT.2020 gamut would be assumed. This means that even if a smaller gamut is encoded in this same container, it will be treated in the same way as a larger one, e.g. a BT.709 and a BT.2020 original video signal will be processed the same way, which may lead to non-optimized results.

For example, if gamut compression is applied to generate a BT.709 output in a BT.709 container from the BT.2020 input, part or all of the BT.709 original colors will be modified. In contrast, if it is known that the original source gamut of the source content encoded within the BT.2020 container is in fact BT.709, a simple clipping processing will be more adapted and will preserve all the original colors, since there will be no colors exceeding the boundaries of the the BT.709 color gamut.

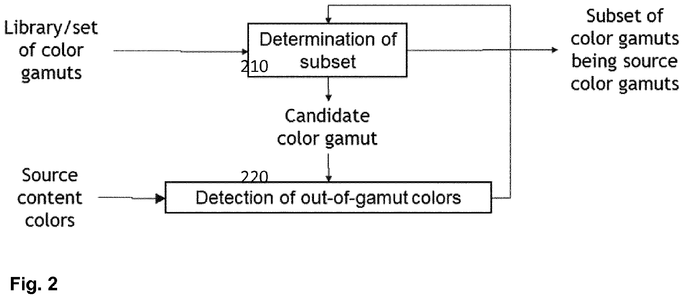

One way to resolve some of the challenges as discussed can be addressed by the methodology according to an embodiment provided in Figure 2. In Figure 2, as shown in step 210, a predefined set of color gamuts are determined. This subset of color gamuts contain only color gamuts that are each a source color gamut by comparing the colors of the source content with the color gamuts of the predefined set. Only certain candidates make it to this subset. This effect is obtained by detecting the presence of out of gamut colors as provided in step 220. If there are out of gamut colors when using a certain candidate, this candidate will not go into the subset. If there are no out of gamut colors when using a certain candidate, this candidate will go into the subset.

In one example, a predefined set of color gamuts can be DCI P3 and BT.709 color gamuts for a source content that is DCI P3 encoded. It is then determined whether DCI P3 is a source color gamut and whether BT.709 is a source color gamut. Referring back to Figure 1, the DCI P3 color gamut includes the BT.709 color gamut. There are two possible cases and the invented method will give in each case the appropriate result. The first case is the mentioned typical use case where the source content was created within the BT.709 color gamut and, according to this example, was encoded in DCI P3. In this case, both, DCI P3 and BT.709 will be identified as a source color gamut. The resulting subset of color gamuts will be DCI P3 and BT.709. In this example, the predefined set of color gamuts is identical to the resulting subset of color gamuts. The second case is that the source content contains colors outside the BT.709 color gamut. Then, DCI P3 will be identified as source color gamut and BT.709 will not be identified as source color gamut. The resulting subset of color gamuts will include only DCI P3.

In another example, a source content is created within DCI P3 and encoded in a BT.2020 container. If the predefined set of color gamuts is again DCI P3 and BT.709, the invented method will retain only the DCI P3 color gamut in the resulting subset, since in general there will be colors in the content that are outside the BT.709 color gamut but inside DCI P3 color gamut.

In an alternate embodiment, a source content is created within DCI P3 and encoded in a BT.2020 container. If the predefined set of color gamuts is again DCI P3 and BT.709, only the DCI P3 color gamut is retained in the resulting subset of Figure 2, since in general there will be colors in the content that are outside the BT.709 color gamut but inside DCI P3 color gamut. In such a case, a predefined set of color gamuts DCI P3 and BT.709 for a source content created within BT.709 and encoded in a BT.2020 source container, the smallest source color gamut among the subset is BT.709. It should be noted that there are cases where several color gamuts of the predefined set may have the same size and thus several color gamuts of the subset may have the same size. Ordering a subset of elements according to their size is a well-known problem. Having several elements of same size within the subset is a common ordering problem and can be handled easily by somebody skilled in the art. In this case identifying the smallest source color gamut may be understood as identifying one or more source color gamuts of same, smallest size. The size can be determined for example as surface of the gamut in the CIE 1931 xy chromaticity diagram.

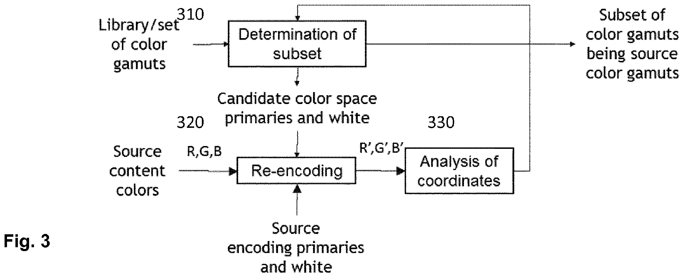

Figure 3 is a flow chart illustration of yet another embodiment. In this embodiment, it is determined as whether a candidate color space includes a candidate color gamut. As shown in Figure 3, the subset is determined again as illustrated in step 310. This is to determine as whether a candidate color gamut from the set of predefined colors gamuts is a source color gamut of the source content. This is done by instituting the following steps:

a) Selecting a candidate color space having as color gamut the candidate color gamut. This is part of the determination of candidate color subset of step 310.
b) Re-encoding the source colors of the source content in color coordinates of that candidate color space as shown in step 320.
c) Comparing the obtained color coordinates to the legal range of color coordinates of the candidate color space; and
d) Declaring the candidate color gamut as a source color gamut if all obtained color coordinates are within said legal range.

Steps c and d can be part of the analysis step 330. In addition, in the example where BT.709 content is used within a BT.2020 source container, source colors could be re-encoded within the DCI P3 color space. Therefore, the linear R,G,B color coordinates within [0;1] are transformed into XYZ color coordinates according to:

$$X = 0.636958048301 * R + 0.144616903586 * G + 0.168880975164 * B$$

$$Y = 0.262700212011 * R + 0.677998071519 * G + 0.059301716470 * B$$

$$Z = 0.028072693049 * G + 1.060985057711 * B$$

These are then transformed into color coordinates R',G',B' of the candidate color space according to :

$$R' = 2.493496911941426 * X - 0.9313836179191243 * Y - 0.402710784450717 * Z$$

$$G' = -0.8294889695615748 * X + 1.762664060318347 * Y + 0.0236246858419436 * Z$$

$$B' = 0.03584583024378447 * X - 0.0761723892680418 * Y + 0.956884524007687 * Z$$

where the matrix coefficients can be obtained according to well-known practice from the chromaticities of the primary colors of BT.709 and DCI P3 using archived SMPTE RP177 assuming D65 white for DCI P3. Since the color gamut of DCI P3 color space is larger than that of the source content, all obtained color coordinates will be within the legal range of DCI P3 color space, i.e. within [0;1] According to the invented method, DCI P3 is then declared to be a source color gamut. When using normalized R, G, B color coordinates in DCI P3, the legal range of color coordinates is usually between zero and one, including zero and one. However, there may be color spaces encoded in integer color coordinates, for example using 10 bits per coordinate, and the legal range may be defined to be between 64 and 940. If headroom is used, the legal range may be between 4 and 1019.

In one embodiment, the subset of color gamuts being source color gamuts is obtained, a confidence estimation could be calculated. For example, comparing for each pair of source color gamuts the number of out of range values.

In another embodiment, a predefined set of color gamuts can be set up. A graphical depiction can be then used for determining the subset of color gamuts where the graph is characterized by:

a) Nodes each representing one color gamut out of the predefined set; and

b) directed edges between nodes pointing to the node where at least one color coordinate of at least one primary color is larger than the corresponding color coordinate of the other node.

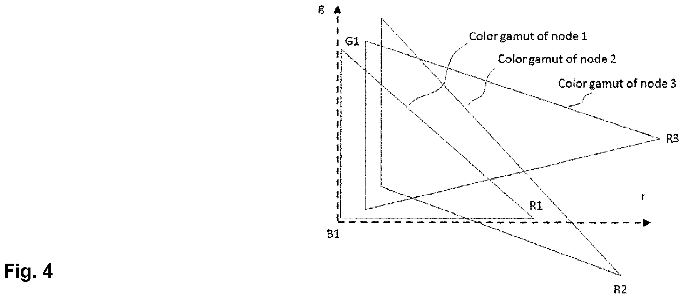

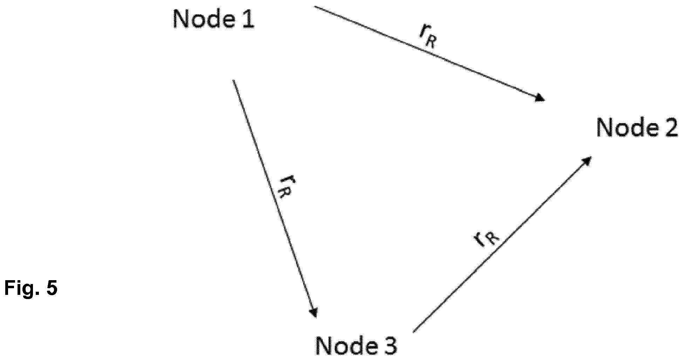

To better understand these concepts Figures 4 and 5 are provided for illustrative clarity. In Figure 4, three color gamuts are shown in r,g coordinates of the color space having as color gamut the first color gamut. A second and a third color gamut are shown, having larger r coordinates for the red primary than the first color gamut. These three color gamuts are then shown in the graph of Figure 5.

The graph of Figure 5 shows three nodes that are representative of the three gamuts. As can be seen, the edges of these are directed and indicate the following

1) The r coordinate of red primary of gamut 2 is larger than that of gamut 1.

2) The r coordinate of red primary of gamut 3 is larger than that of gamut 1.

3) The r coordinate of red primary of gamut 3 is larger than that of gamut 2.

More edges can be added for the other primaries green and blue. More edges concerning other color coordinates can be added, for example g of r,g space, R,G,B coordinates, X,Y,Z coordinates or L,a,b coordinates. More edges can be added for other primary colors, for example red and green, but also for other colors on the gamut boundary, for example black and white.

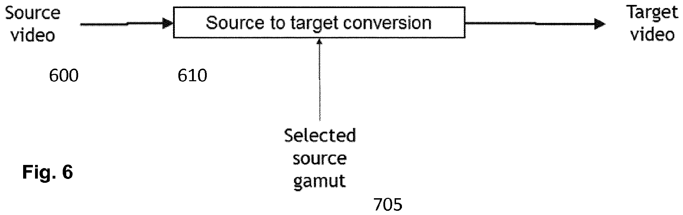

A typical application of these embodiments is shown in Figure 6 where the source gamut of a source video received needs to be known. In this situation, the actual content color gamut of a video is detected and the color is converted. This is similar to Figure 1 where a source video is converted into a target video (referenced as 610). The source video 600 is encoded in a source encoding color space 605 that is different from the target encoding color space. The source colors of the source video need to be re-encoded and often changed in order to fit within the target encoding color space. Possible changes include compression and expansion in color space, called also gamut mapping. It is well known that gamut mapping usually requires the actual source content color gamut to be efficient. If the actual source content color gamut is not known, a method is required to select an appropriate source gamut.

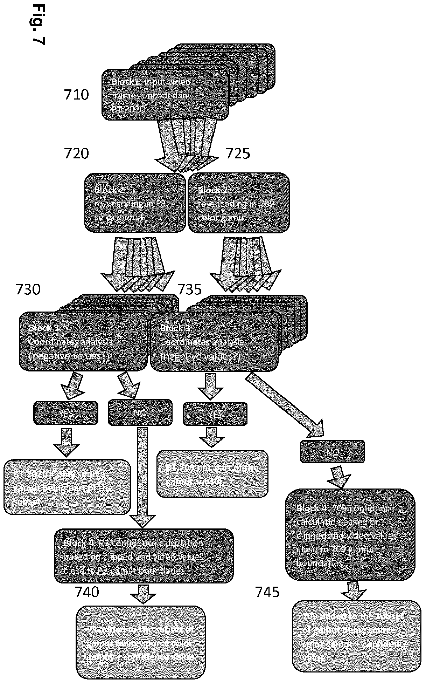

The overall methodology is provided in Figure 7. In one embodiment, an example is used having a case of a video encoded in BT.2020 color space. More specifically, the cases of BT.2020 to P3 and BT.2020 to BT.709 conversion are considered. The library set of color gamuts consists of BT.2020, DCI P3 and BT709.

In Step 710, referenced as Block 1, the detection process could be done using the whole frames of the video or part of them. Consequently, this block provides to the second block the totality of the frames that composes the video or subsample the video and provides for example, regularly frame samples of it (e.g. one every second). In one simpler embodiment, each frame could be considered as RGB 8 bits (each RGB component value varying in 0 to 255 range).

In Step 720 and 725, referenced as Block 2, a calculation step is performed (Each block 2 associates a new RGB value to each input value). In summary, this block calculates for each RGB pixel of each frame coming from block 1 a color transformation from one source color space to a target one (Ex for BT.2020 to DCI P3,) the following matrix could be used:

$$Mat_{2020toDCIP3} \begin{pmatrix} 1.4296136 & -0.3736557 & -0.0559579 \\ -0.0658384 & 1.0774903 & -0.0116519 \\ 0.0034299 & -0.0305627 & 1.0271329 \end{pmatrix}$$

Or for BT.2020 to BT.709:

$$Mat_{2020to709} \begin{pmatrix} 1.6604910 & -0.5876411 & -0.0728499 \\ -0.1245505 & 1.1328999 & -0.0083494 \\ -0.0181508 & -0.1005789 & 1.1187297 \end{pmatrix}$$

In Steps 730 and 735, or Block 3, the output value of Block 2 is analyzed using the previous matrices. Out of range values are R, G or B values negative or higher than 255. A bit of flexibility could be allowed to allow values going out of gamut for a fixed percentage of the range of allowed values, e.g. 2% above or below the minimum and maximum achievable values in the defined gamut.

In Steps 740 and 745, or Block 4, a gamut confidence estimation is determined when out of range pixels have been found with block 3. The result is based on how close to the gamut boundaries a certain number of pixels are. That supposes to find very saturated colors in the frames but we suppose that is normally the case in a full video.

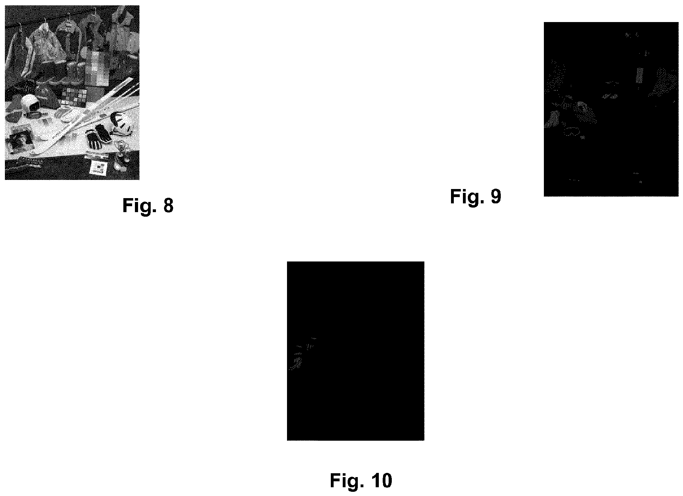

This analysis could be done - 1) in a straightforward way analyzing the RGB values; or 2) in a more perceptually linear color space (e.g. CIELab). Examples of these are provided in illustrations of Figures 8-10. In Figure 8, the Input DCI P3 picture in BT.2020 encoding color space is provided. Figure 9 is an illustration of an out of range value after BT.2020 to BT.709 transformation in RGB (255 in each out of range channel, 0 if not). Figure 10, provides an out of range value after BT.2020 to BT.709 transformation in RGB (255 in each out of range channel, 0 if not).

In the previous given examples, only one frame is used to calculate the out of range pixels. The result should be more reliable with a sequence of frames (the sum of each result could be used in that case). Figure 9 and 10 represents out of range pixels in RGB. On 8-bit video values, out of range values are taken as lower than -5 or upper than 260 after transformation (corresponds to +/- 2% of the full range). This error margin is introduced to avoid false detection and smooth the confidence value calculation. The confidence value could be expressed according to the invert of the percentage of out range pixels:

$$Conf_{P3} = 1 - f\left(\frac{Number\ of\ out\ of\ range\ pixels}{Total\ number\ of\ pixels}\right)$$

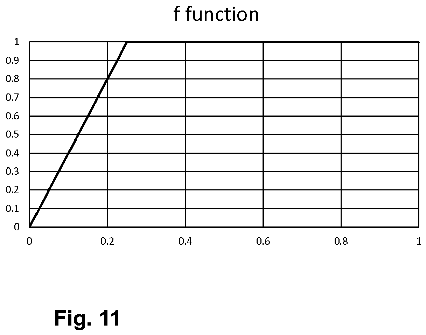

Figure 11 provides a function example f(x). In one example f(x) is equal to 4 aa*x and values outside 0 and 1 are clipped. For a given video or image, a confidence value can be calculated for each source color gamut of the subset, giving a comparison criterion between all elements of that subset and possibly to define the real source color gamut of that given video or image.

These embodiments can allow gamut estimation based on source content, not need of metadata. Use of re-encoding, may allow source color gamut estimation by simple in or out of range checking of color coordinates, without requiring geometrical computations. Use of graph representation, allows efficient gamut estimation with reduced operations on the predefined set of color gamuts. In this case, the appropriate source color gamut and optimize image processing is selected and extended to camera "gamut".

In one example, the presence of color gamut estimation first is detected, for example by proving that such originally non-existing information is used for succeeding operations. Second, at least one of the key elements of the invented method can be detected: Either re-encoding and range checking or the use of a graph for representing color gamuts.

**Claims**

1.    A method of providing a color gamut for source content, the method comprising:

comparing colors of the source content with a set of color gamuts, a color gamut of the set of color gamuts containing a plurality of colors; and
selecting, from the plurality of color gamuts, based on the comparison, one or more color gamuts, each containing all the colors of the source content.

2.    An apparatus for providing a color gamut for source content, the apparatus comprising at least one processor configured for

comparing colors of the source content with a set of color gamuts, each color gamut of the set of color gamuts containing a plurality of colors; and
selecting, from the plurality set of color gamuts, based on the comparison, one or more color gamuts, each containing all the colors of the source content.

3. The method according to claim 1 or the apparatus according to claim 2 wherein one or more color gamuts containing the least number of colors which includes the colors of the source content are selected from the set based on the comparison.

4. The method according to claim 1 or 3 or the apparatus according to claim 2 or 3, wherein a color space is used for colors of the source content and the source content and a selection of color gamuts are eliminated that include out of range encoding values.

5. The method according to claim 4 or the apparatus according to claim 4, wherein said colors in said color space each contain a size wherein said color gamuts are selected based on a comparison of the size of the color gamuts in said color space.

6. The method or apparatus of claim 5 wherein a subset of color gamuts having the smallest size in said color space are selected.

7. The method according to claim 1 or any of 3-6 comprising: or the apparatus according to any of claims 2-6 wherein the processor is configured for:

eliminating from said selection color gamuts having colors with out of range encoding values; and
selecting at least one of the remaining color gamuts that contains the smallest size.

8. The method of according to any of claims 1 and 3-7 or the apparatus according to any of claims 2-7, wherein a color gamut containing colors that are each a color of the source color gamut is selected.

9. The method of according to any of claims 1 and 3-8 or the apparatus according to any of claims 2-7, wherein more than one color gamut have the same size.

10. The method of according to any of claims 1 and 3-9 further comprising or the apparatus according to any of claims 2-9 further configured for determining whether a candidate color gamut from the set of color gamuts is a source color gamut of the source content.

11. The method or apparatus of claim 10, wherein said determination as to whether a candidate color gamut is a source color gamut of source content is further comprised by selecting a candidate color space having as color gamut the candidate color gamut; and re-encoding the source colors of the source content in color coordinates of that candidate color space.

12. The method or apparatus of claim 11, wherein said obtained color coordinates are compared to the legal range of color coordinates of the candidate color space.

13. The method of claim 12, further comprising: or the apparatus of claim 12 further configured for: determining if the candidate color gamut is as a source color gamut if all obtained color coordinates are within said legal range after said comparison step.

14. A computer program product including instructions of which when executed by a processor cause the processor to execute the method according to one of claims 1 or 3-13, when said program is executed on a computing device.

15. A display device or a mobile terminal comprising an apparatus according to any one of claims 2 to 12.

**Fig. 1**

**Fig. 2**

Library/set³¹⁰
of color
gamuts

Determination of
subset

Subset of
color gamuts
being source
color gamuts

Candidate color space
primaries and white

320

330

Source
content
colors

R,G,B

Re-encoding

R',G',B'

Analysis of
coordinates

Source
encoding primaries
and white

**Fig. 3**

**Fig. 4**

Fig. 5

Source
video ———————▶ | Source to target conversion | ———————▶ Target
video

600                    610

Selected
source
gamut

**Fig. 6**                    705

**Fig. 7**

710 Block1: input video frames encoded in BT.2020

720 Block 2 : re-encoding in P3 color gamut

725 Block 2 : re-encoding in 709 color gamut

730 Block 3: Coordinates analysis (negative values?)

735 Block 3: Coordinates analysis (negative values?)

YES

NO

YES

NO

BT.2020 = only source gamut being part of the subset

BT.709 not part of the gamut subset

Block 4: P3 confidence calculation based on clipped and video values close to P3 gamut boundaries

Block 4: 709 confidence calculation based on clipped and video values close to 709 gamut boundaries

740 P3 added to the subset of gamut being source color gamut + confidence value

745 709 added to the subset of gamut being source color gamut + confidence value

**Fig. 8**

**Fig. 9**

**Fig. 10**

f function

**Fig. 11**

Europäisches
Patentamt

European
Patent Office

Office européen
des brevets

# EUROPEAN SEARCH REPORT

Application Number

EP 19 30 5399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/065923 A1 (ARAI TAKAYUKI [JP]) 3 March 2016 (2016-03-03) * abstract * * figures 1-5 * * paragraphs [0003] - [0007], [0028], [0032], [0047] - [0066] * | 1-15 | INV. H04N9/64 H04N1/64 H04N1/56 H04N19/00 |
| X | JP 2016 052058 A (TOSHIBA CORP; TOSHIBA LIFESTYLE PRODUCTS & SERVICES CORP) 11 April 2016 (2016-04-11) * abstract * * figure 1 * * paragraphs [0001] - [0011], [0015], [0019] - [0025], [0033] - [0035], [0040] - [0046], [0053] - [0059] * | 1-15 | |
| A | EP 3 094 096 A1 (LG ELECTRONICS INC [KR]) 16 November 2016 (2016-11-16) * the whole document * | 1-15 | |

TECHNICAL FIELDS SEARCHED (IPC)

H04N

The present search report has been drawn up for all claims

| Place of search | Date of completion of the search | Examiner |
|---|---|---|
| The Hague | 28 August 2019 | Visser, Michelle L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 716 619 A1

## ANNEX TO THE EUROPEAN SEARCH REPORT
## ON EUROPEAN PATENT APPLICATION NO.

EP 19 30 5399

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2019

| Patent document cited in search report | | Publication date | Patent family member(s) | | Publication date |
|---|---|---|---|---|---|
| US 2016065923 | A1 | 03-03-2016 | JP 2016052015 A<br>US 2016065923 A1 | | 11-04-2016<br>03-03-2016 |
| JP 2016052058 | A | 11-04-2016 | NONE | | |
| EP 3094096 | A1 | 16-11-2016 | EP 3094096 A1<br>JP 6282357 B2<br>JP 2017511080 A<br>KR 20160091953 A<br>US 2017048561 A1<br>US 2018295393 A1<br>WO 2015102449 A1 | | 16-11-2016<br>21-02-2018<br>13-04-2017<br>03-08-2016<br>16-02-2017<br>11-10-2018<br>09-07-2015 |

EPO FORM P0459

For more details about this annex : see Official Journal of the European Patent Office, No. 12/82